# EUROPÄISCHE PATENTSCHRIFT

(11) **EP 3 954 035 B1**
(45) Veröffentlichungstag und Bekanntmachung des Hinweises auf die Patenterteilung: **28.01.2026**
(21) Anmeldenummer: 19727864.1
(22) Anmeldetag: 15.05.2019
(51) Int. Cl.: H02M 7/483, H02M 1/32, H02M 7/757, H02M 7/12, H02J 3/36, H02J 1/00, H02H 1/00

(54) **ANORDNUNG MIT EINEM MULTILEVELSTROMRICHTER**
ASSEMBLY HAVING A MULTILEVEL POWER CONVERTER
AGENCEMENT AVEC UN CONVERTISSEUR À MULTIPLES NIVEAUX

(43) Veröffentlichungstag der Anmeldung: 16.02.2022
(73) Patentinhaber: Siemens Energy Global GmbH & Co. KG, 81739 München (DE)
(72) Erfinder: ALVAREZ VALENZUELA, Rodrigo Alonso, 90408 Nürnberg (DE); SEMMLER, Sebastian, 90427 Nürnberg (DE)
(86) Internationale Anmeldenummer: PCT/EP2019/062505
(87) Internationale Veröffentlichungsnummer: WO 2020/228951

(56) Entgegenhaltungen:
- EP-A1- 3 068 008
- EP-A1- 3 068 008
- CN-A- 106 100 404
- CN-A- 106 953 347
- CN-A- 106 953 509
- CN-U- 208 738 855
- P. TUNNERHOFF ET AL: "Fault analysis of HVDC systems with partial underground cabling", 13TH IET INTERNATIONAL CONFERENCE ON AC AND DC POWER TRANSMISSION (ACDC 2017), 1 January 2017 (2017-01-01), pages 19 (6 .) - 19 (6 .), XP055626906, ISBN: 978-1-78561-421-7, DOI: 10.1049/cp.2017.0019
- P. TUNNERHOFF ET AL: "Fault analysis of HVDC systems with partial underground cabling", 13TH IET INTERNATIONAL CONFERENCE ON AC AND DC POWER TRANSMISSION (ACDC 2017), 1 January 2017 (2017-01-01), pages 19 (6 .) - 19 (6 .), XP055626906, ISBN: 978-1-78561-421-7, DOI: 10.1049/cp.2017.0019

## Beschreibung

Die Erfindung betrifft eine Anordnung mit einem Multilevelstromrichter, der mindestens ein Phasenmodul aufweist, wobei das Phasenmodul eine Mehrzahl von Modulen aufweist, die jeweils einen ersten elektrischen Modulanschluss und einen zweiten elektrischen Modulanschluss aufweisen. Weiterhin betrifft die Anmeldung ein Verfahren zum polaritätsabhängigen Begrenzen einer an einem derartigen Multilevelstromrichter auftretenden Spannung.

Beim Betrieb eines Multilevelstromrichters kann es (beispielsweise aufgrund eines Fehlers oder eines singulären Ereignisses an einer mit dem Multilevelstromrichter verbundenen Gleichstromübertragungsstrecke) zu temporären Schwingungen/Oszillationen der Gleichspannung kommen. Aufgrund dieser Spannungsschwingungen kann es passieren, dass an den Gleichspannungsanschlüssen des Multilevelstromrichters hohe negative Spannungen auftreten. Solche hohen negativen Spannungen können insbesondere dann auftreten, wenn die Gleichstromübertragungsstrecke verschiedene Leiterarten aufweist, beispielsweise wenn die Gleichstromübertragungsstrecke teilweise aus einem Kabel und teilweise aus einer Freileitung besteht. Durch Reflektionen zwischen den verschiedenen Leiterarten können dann besonders hohe negative Spannungen auftreten. Unter "negativer Spannung" wird hier eine Spannung verstanden, deren Polarität entgegengesetzt ist zu der Polarität der im Normalbetrieb an dem ersten Gleichspannungsanschluss und dem zweiten Gleichspannungsanschluss des Multilevelstromrichters anliegenden Spannung ("positiver Spannung").

Zur Beherrschung solcher unerwünschter negativen Spannungen ist es denkbar, die Anzahl der Module des modularen Multilevelstromrichters zu vergrößern, damit dieser die auftretenden Spannungen aufnehmen kann, ohne die einzelnen Module zu überlasten. Eine derartige Erhöhung der Anzahl der Module ist allerdings aufwendig und kostenintensiv. Insbesondere könnten auch (mehr) bipolare Module wie beispielsweise Vollbrückenmodule eingesetzt werden, was ebenfalls höhere Kosten zur Folge hätte.

Aus der europäischen Patentanmeldung EP 3 068 008 A1 ist ein modularer Multilevelstromrichter bekannt, der mehrere Submodul-Reihenschaltungen aufweist. Parallel zu den Submodul-Reihenschaltungen ist jeweils eine Bypass-Schutzschaltung geschaltet, die einen Überspannungsschutz bereitstellen kann.

Aus der Schrift CN 106 100 404 A ist ein Multilevelstromrichter mit drei Phasenmodulen bekannt. Zwischen dem ersten Gleichspannungsanschluss und dem zweiten Gleichspannungsanschluss des Multilevelstromrichters ist ein elektronischer Bypass-Schalter auf Thyristorbasis angeordnet. Dieser elektronische Bypass-Schalter wird bei Auftreten eines Fehlers geschlossen und verbindet dann den ersten Gleichspannungsanschluss mit dem zweiten Gleichspannungsanschluss. Dadurch werden die Module des Multilevelstromrichters geschützt.

Die Schriften CN 106 953 347 A und CN 208 738 855 U offenbaren jeweils einen Multilevelstromrichter, der sowohl Halbbrücken-Module als auch Vollbrücken-Module aufweist. Einige der Vollbrücken-Module sind dabei jeweils benachbart zu einem Wechselspannungsanschluss eines Phasenmoduls angeordnet und einige der Vollbrücken-Module sind benachbart zu einem Gleichspannungsanschluss des Phasenmoduls angeordnet.

Aus der Schrift CN 106 953 509 A ist ein Modul eines Multilevelstromrichters bekannt, das einen Kondensator als Energiespeicher aufweist. Parallel zu dem Kondensator ist eine Reihenschaltung aus einer Diode und einem Widerstand geschaltet. Diese Reihenschaltung schützt den Kondensator vor einer Überladung.

Der Erfindung liegt die Aufgabe zugrunde, eine Anordnung und ein Verfahren anzugeben, mit denen die temporär auftretenden negativen Spannungen beherrscht werden können, ohne die Anzahl der Module des Multilevelstromrichters vergrößern zu müssen.

Diese Aufgabe wird erfindungsgemäß gelöst durch eine Anordnung und ein Verfahren nach den unabhängigen Patentansprüchen. Vorteilhafte Ausführungsformen der Anordnung und des Verfahrens sind in den abhängigen Patentansprüchen angegeben.

Offenbart wird eine Anordnung mit einem Multilevelstromrichter, der mindestens ein Phasenmodul aufweist, wobei das Phasenmodul eine Mehrzahl von Modulen aufweist, die jeweils einen ersten elektrischen Modulanschluss und einen zweiten elektrischen Modulanschluss aufweisen. Die Mehrzahl von Modulen weist Module ersten Typs auf, die an ihrem ersten elektrischen Modulanschluss und ihrem zweiten elektrischen Modulanschluss eine Spannung ausschließlich einer Polarität oder die Spannung Null auszugeben imstande sind. Die Mehrzahl von Modulen weist Module zweiten Typs auf, die an ihrem ersten elektrischen Modulanschluss und ihrem zweiten elektrischen Modulanschluss eine Spannung einer Polarität, eine Spannung entgegengesetzter Polarität oder die Spannung Null auszugeben imstande sind. Die Anordnung weist weiterhin eine Spannungsbegrenzungseinrichtung auf, die in Abhängigkeit von der Polarität einer über den Modulen zweiten Typs auftretenden Spannung (Gesamtspannung) diese Spannung begrenzt.

Die Spannungsbegrenzungseinrichtung führt also eine polaritätsabhängige Spannungsbegrenzung durch. Dabei ist vorteilhaft, dass die Spannungsbegrenzungseinrichtung die über den Modulen zweiten Typs auftretende Spannung in Abhängigkeit von der Polarität dieser Spannung begrenzt. Die Polarität der über den Modulen zweiten Typs auftretenden Spannung ist dabei gleich der Polarität der zwischen einem ersten Gleichspannungsanschluss und einem zweiten Gleichspannungsanschluss des Multilevelstromrichters auftretenden Spannung. Mit dieser Spannungsbegrenzungseinrichtung kann also vorteilhafterweise nur die unerwünschte negative Spannung begrenzt werden, die im Normalbetrieb auftretende positive Spannung zwischen dem ersten und zweiten Gleichspannungsanschluss wird jedoch nicht begrenzt. Die Spannungsbegrenzungseinrichtung kann insbesondere die Module zweiten Typs überbrücken. Mit anderen Worten gesagt, kann die Spannungsbegrenzungseinrichtung parallel zu den Modulen zweiten Typs geschaltet sein.

Die Anordnung ist so ausgestaltet, dass
- das Phasenmodul einen Wechselspannungsanschluss, einen ersten Gleichspannungsanschluss und einen zweiten Gleichspannungsanschluss aufweist. Der Multilevelstromrichter ist dann insbesondere ein Wechselrichter oder ein Gleichrichter.

Die Anordnung ist so ausgestaltet, dass
- die Module zweiten Typs benachbart zu dem Wechselspannungsanschluss des Phasenmoduls angeordnet sind, und die Module ersten Typs benachbart zu dem ersten und/oder dem zweiten Gleichspannungsanschluss des Phasenmoduls angeordnet sind. Dadurch ergibt sich eine zu dem Wechselspannungsanschluss benachbarte Reihenschaltung von Modulen zweiten Typs.

Die Anordnung kann auch so ausgestaltet sein, dass
- die Module jeweils mindestens ein erstes elektronisches Schaltelement, ein zweites elektronisches Schaltelement und einen elektrischen Energiespeicher aufweisen.

Die Anordnung kann so ausgestaltet sein, dass
- die Module ersten Typs jeweils das erste elektronische Schaltelement und das zweite elektronische Schaltelement in einer Halbbrückenschaltung aufweisen.

Die Anordnung kann auch so ausgestaltet sein, dass
- die Module ersten Typs in Parallelschaltung zu dem zweiten elektronischen Schaltelement ein zusätzliches Halbleiterventil aufweisen, insbesondere eine Diode, ein Thyristor, ein IGCT oder ein GTO.

Dieses zusätzliche Halbleiterventil ist insbesondere zwischen den ersten elektrischen Modulanschluss und den zweiten elektrischen Modulanschluss geschaltet. Das zusätzliche Halbleiterventil ist insbesondere gleichsinnig und parallel zu einer Diode geschaltet, welche antiparallel zu dem zweiten elektronischen Schaltelement geschaltet ist. Das zusätzliche Halbleiterventil dient zur Entlastung der antiparallel zu dem zweiten elektronischen Schaltelement geschalteten Diode.

Die Anordnung kann so ausgestaltet sein, dass
- die Module zweiten Typs jeweils das erste elektronische Schaltelement, das zweite elektronische Schaltelement, ein drittes elektronisches Schaltelement und ein viertes elektronisches Schaltelement in einer Vollbrückenschaltung aufweisen.

Die Spannungsbegrenzungseinrichtung ist so ausgestaltet, dass diese nur eine über den Modulen zweiten Typs auftretende Spannung einer Polarität begrenzt, und insbesondere eine über den Modulen zweiten Typs auftretende Spannung der entgegengesetzten Polarität im Wesentlichen unverändert lässt. Die Spannungsbegrenzungseinrichtung begrenzt dann also ausschließlich über den Modulen zweiten Typs auftretende Spannungen einer Polarität, und lässt insbesondere über den Modulen zweiten Typs auftretende Spannungen der entgegengesetzten Polarität im Wesentlichen unverändert. Damit begrenzt die Spannungsbegrenzungseinrichtung also auch ausschließlich zwischen dem ersten Gleichspannungsanschluss und dem zweiten Gleichspannungsanschluss auftretende Spannungen einer Polarität, und lässt insbesondere zwischen dem ersten Gleichspannungsanschluss und dem zweiten Gleichspannungsanschluss auftretende Spannungen der entgegengesetzten Polarität im Wesentlichen unverändert. Die "Spannung einer Polarität" ist also die unerwünschte negative Spannung; die "Spannung entgegengesetzter Polarität" ist die im Normalbetrieb des Stromrichters auftretende (erwünschte) positive Spannung.

Die Spannungsbegrenzungseinrichtung kann so ausgestaltet sein, dass nur bei Auftreten der Spannung der einen Polarität über den Modulen zweiten Typs ein Strom durch die Spannungsbegrenzungseinrichtung fließt (und dadurch die Spannung der einen Polarität begrenzt).

Die Spannungsbegrenzungseinrichtung kann also so ausgestaltet sein, dass nur dann ein Strom durch die Spannungsbegrenzungseinrichtung fließt (und dadurch die Spannung der einen Polarität begrenzt), wenn die Spannung der einen Polarität zwischen dem ersten Gleichspannungsanschluss und dem zweiten Gleichspannungsanschluss auftritt. Durch den Strom, der durch die Spannungsbegrenzungseinrichtung fließt, wird die Spannung der einen Polarität belastet oder (ganz oder teilweise) kurzgeschlossen und dadurch begrenzt.

Die Anordnung ist auch so ausgestaltet, dass die Spannungsbegrenzungseinrichtung mindestens ein Halbleiterventil, insbesondere eine Reihenschaltung von Halbleiterventilen, aufweist. Durch das Halbleiterventil wird die Polaritätsabhängigkeit der Spannungsbegrenzung realisiert. Dabei kann das Halbleiterventil ein ungesteuertes Halbleiterventil (zum Beispiel eine Diode) oder ein einschaltbares Halbleiterventil (zum Beispiel ein Thyristor oder ein Transistor) sein.

Die Anordnung kann so ausgestaltet sein, dass die Reihenschaltung mindestens 50 Halbleiterventile aufweist. Mittels dieser vergleichsweise großen Anzahl an Halbleiterventilen lässt sich vorteilhafterweise eine hohe Sperrspannung realisieren, damit die (erwünschte) Spannung der entgegengesetzten Polarität im Wesentlichen unverändert bleibt.

Die Anordnung kann so ausgestaltet sein, dass das Halbleiterventil eine Diode, ein Thyristor oder ein Transistor ist. Insbesondere kann die Diode eine Leistungsdiode sein (zum Beispiel eine als Scheibenzelle ausgestaltete Diode); der Thyristor kann ein Leistungsthyristor sein (zum Beispiel ein als Scheibenzelle ausgestalteter Thyristor). Das Halbleiterventil kann beispielsweise als ein integrated gate-commutated thyristor (IGCT), ein gate turn-off thyristor (GTO-Thyristor), ein insulated-gate bipolar transistor (IGBT) oder als ein metaloxide-semiconductor field-effect transistor (MOSFET) ausgestaltet sein.

Die Anordnung kann auch so ausgestaltet sein, dass in Reihe zu dem mindestens einen Halbleiterventil ein elektrischer Widerstand geschaltet ist. Durch den elektrischen Widerstand kann vorteilhafterweise der durch die Spannungsbegrenzungseinrichtung fließende Strom begrenzt werden. Außerdem kann an dem elektrischen Widerstand (im Fehlerfall) die in der Gleichstromübertragungsstrecke gespeicherte elektrische Energie in Wärme umgesetzt werden.

Die Anordnung kann dabei so ausgestaltet sein, dass der elektrische Widerstand ein Varistor (spannungsabhängiger Widerstand) ist, insbesondere ein Metalloxid-Varistor. Als Varistor kann beispielsweise ein Überspannungsableiter verwendet werden. Mittels eines solchen Überspannungsableiters kann durch entsprechende Wahl der Ansprechspannung/Schwellenspannung erreicht werden, dass die Spannungsbegrenzung erst ab einer bestimmten Größe der (unerwünschten) Spannung der einen Polarität einsetzt.

Die Anordnung kann auch so ausgestaltet sein, dass der erste Gleichspannungsanschluss und der zweite Gleichspannungsanschluss mit einer Gleichstromübertragungsstrecke, insbesondere einer Hochspannungs-Gleichstromübertragungsstrecke, verbunden ist, wobei die Gleichstromübertragungsstrecke zwei verschiedene Leiterarten aufweist, welche sich bezüglich ihrer längenbezogenen elektrischen Kapazität unterscheiden ("gemischte Gleichstromübertragungsstrecke"). Bei derartigen Gleichstromübertragungsstrecken kann die Spannungsbegrenzungseinrichtung mit besonderem Vorteil eingesetzt werden, weil bei zwei verschiedenen Leiterarten besonders hohe unerwünschte negative Spannungen an den Gleichspannungsanschlüssen des Multilevelstromrichters auftreten können.

Die Anordnung kann dabei so ausgestaltet sein, dass die verschiedenen Leiterarten eine Freileitung, ein Kabel und/oder eine gasisolierte Leitung sind. Das Kabel kann insbesondere ein Hochspannungskabel sein. Dabei hat beispielsweise ein Kabel eine höhere längenbezogene elektrische Kapazität als eine Freileitung. Als ein weiteres Beispiel hat eine gasisolierte Leitung eine höhere längenbezogene elektrische Kapazität als eine Freileitung.

Die Anordnung kann auch so ausgestaltet sein, dass das Kabel ein kunststoffisoliertes Kabel, ein ölisoliertes Kabel oder ein masseisoliertes Kabel (mass-impregnated cable) ist. Insbesondere kann die Gleichstromübertragungsstrecke eine Freileitung und ein Kabel (insbesondere ein kunststoffisoliertes Kabel, ein ölisoliertes Kabel oder ein masseisoliertes Kabel) aufweisen.

Die Anordnung kann auch so ausgestaltet sein, dass das Phasenmodul Module ersten Typs und Module zweiten Typs aufweist, von denen zumindest einige Module elektrisch in Reihe geschaltet sind.

Die Anordnung kann so ausgestaltet sein, dass der Multilevelstromrichter 2 oder 3 Phasenmodule aufweist. Diese Phasenmodule können an ihrem ersten Gleichspannungsanschluss und zweiten Gleichspannungsanschluss parallelgeschaltet sein. Damit kann der Multilevelstromrichter auch in zweiphasigen oder dreiphasigen Stromnetzen eingesetzt werden. Dabei kann insbesondere die Spannungsbegrenzungseinrichtung (also eine einzige Spannungsbegrenzungseinrichtung) zwischen den Phasenmodulen umschaltbar sein. Alternativ kann mindestens einem der Phasenmodule jeweils eine eigene Spannungsbegrenzungseinrichtung (fest) zugeordnet sein. Es können also ein Phasenmodul, zwei Phasenmodule oder alle drei Phasenmodule jeweils eine (eigene) Spannungsbegrenzungseinrichtung aufweisen bzw. zugeordnet sein.

Die Anordnung kann so ausgestaltet sein, dass die Spannungsbegrenzungseinrichtung eine erste Reihenschaltung aus dem mindestens einen Halbleiterventil (bzw. den Halbleiterventilen) und dem elektrischen Widerstand und eine zweite Reihenschaltung aus mindestens einem weiteren Halbleiterventil (bzw. weiteren Halbleiterventilen) und einem weiteren elektrischen Widerstand aufweist. Der Verbindungspunkt (Mitten-Verbindungspunkt) / die Verbindungsstelle zwischen der ersten Reihenschaltung und der zweiten Reihenschaltung ist geerdet. Der diesem Verbindungspunkt (Mitten-Verbindungspunkt) gegenüberliegenden Anschluss der ersten Reihenschaltung ist mit einem ersten Verbindungspunkt zwischen den Modulen ersten Typs und den Modulen zweiten Typs (in dem einen Phasenmodulzweig des Phasenmoduls) elektrisch verbunden; der dem Verbindungspunkt (Mitten-Verbindungspunkt) gegenüberliegenden Anschluss der zweiten Reihenschaltung ist mit einem zweiten Verbindungspunkt zwischen den Modulen ersten Typs und den Modulen zweiten Typs (in dem anderen Phasenmodulzweig des Phasenmoduls) elektrisch verbunden. Die Halbleiterventile und die Widerstände können so ausgestaltet sein wie oben und in den Ausführungsbeispielen angegeben. Diese Anordnung kann insbesondere bei einer Symmetrischer-Monopol-Konfiguration einer Hochspannungs-Gleichstrom-Übertragungsanlage eingesetzt werden.

Offenbart wird weiterhin eine Hochspannungs-Gleichstrom-Übertragungsanlage mit einer Anordnung nach einer der vorstehend beschriebenen Varianten.

Offenbart wird weiterhin ein Verfahren zum polaritätsabhängigen Begrenzen einer Spannung bei einem Multilevelstromrichter, der mindestens ein Phasenmodul aufweist,
- wobei das Phasenmodul eine Mehrzahl von Modulen (1_1 ... 2_n) aufweist, die jeweils einen ersten elektrischen Modulanschluss und einen zweiten elektrischen Modulanschluss aufweisen,
- die Mehrzahl von Modulen Module ersten Typs aufweist, die an ihrem ersten elektrischen Modulanschluss und ihrem zweiten elektrischen Modulanschluss eine Spannung ausschließlich einer Polarität oder die Spannung Null auszugeben imstande sind,
- die Mehrzahl von Modulen Module zweiten Typs aufweist, die an ihrem ersten elektrischen Modulanschluss und ihrem zweiten elektrischen Modulanschluss eine Spannung einer Polarität, eine Spannung entgegengesetzter Polarität oder die Spannung Null auszugeben imstande sind, wobei bei dem Verfahren
- mit einer Spannungsbegrenzungseinrichtung nur eine über den Modulen zweiten Typs auftretende Spannung einer Polarität begrenzt wird und insbesondere eine über den Modulen zweiten Typs auftretende Spannung der entgegengesetzten Polarität im Wesentlichen unverändert gelassen wird.

Insbesondere wird (durch die Spannungsbegrenzungseinrichtung) auch eine über den Modulen ersten Typs auftretende Spannung im Wesentlichen unverändert gelassen. Die Spannungsbegrenzungseinrichtung kann die Module zweiten Typs überbrücken. Mit anderen Worten gesagt, kann die Spannungsbegrenzungseinrichtung parallel zu den Modulen zweiten Typs geschaltet sein. Das Phasenmodul kann einen Wechselspannungsanschluss, einen ersten Gleichspannungsanschluss und einen zweiten Gleichspannungsanschluss aufweisen. Zumindest einige Module der Mehrzahl von Modulen können elektrisch in Reihe geschaltet sein.

Das Verfahren kann so ausgestaltet sein, dass
- nur bei Auftreten der Spannung der einen Polarität über den Modulen zweiten Typs ein Strom durch die Spannungsbegrenzungseinrichtung fließt und dadurch die Spannung der einen Polarität begrenzt wird.

Dieses Verfahren ist dann also so ausgestaltet sein, dass nur bei Auftreten der Spannung der einen Polarität zwischen dem ersten Gleichspannungsanschluss und dem zweiten Gleichspannungsanschluss ein Strom durch die Spannungsbegrenzungseinrichtung fließt und dadurch die Spannung der einen Polarität begrenzt wird.

Das Verfahren kann so ablaufen, dass
- die Module ersten Typs jeweils ein erstes elektronische Schaltelement und ein zweites elektronische Schaltelement in einer Halbbrückenschaltung aufweisen, wobei in Parallelschaltung zu dem zweiten elektronischen Schaltelement ein zusätzliches Halbleiterventil angeordnet ist und
- nur bei Auftreten der Spannung der einen Polarität über den Modulen zweiten Typs ein Teil des durch die Module ersten Typs fließenden Stroms durch das zusätzliche Halbleiterventil fließen wird bzw. geleitet wird. Insbesondere kann dann der überwiegende Teil des durch die Module ersten Typs fließenden Stroms durch das zusätzliche Halbleiterventil geleitet werden.

Die beschriebene Anordnung und das beschriebene Verfahren weisen gleiche bzw. gleichartige Vorteile auf.

Im Folgenden wird die Erfindung anhand von Ausführungsbeispielen näher erläutert. Gleiche Bezugszeichen verweisen dabei auf gleiche oder gleichwirkende Elemente. Dazu ist in
- Figur 1: ein Ausführungsbeispiel eines Multilevelstromrichters mit einer Spannungsbegrenzungseinrichtung, in den
- Figuren 2 und 3: weitere Ausführungsbeispiele eines Multilevelstromrichters mit einer Spannungsbegrenzungseinrichtung, in
- Figur 4: ein Ausführungsbeispiel einer Hochspannungs-Gleichstrom-Übertragungsanlage mit einem derartigen Multilevelstromrichter, in
- Figur 5: ein Ausführungsbeispiel eines Moduls ersten Typs des Multilevelstromrichters in Form eines Halbbrückenmoduls, in
- Figur 6: ein Ausführungsbeispiel eines Moduls zweiten Typs des Multilevelstromrichters in Form eines Vollbrückenmoduls und in
- Figur 7: ein weiteres Ausführungsbeispiel eines Multilevelstromrichters mit einer Spannungsbegrenzungseinrichtung dargestellt.

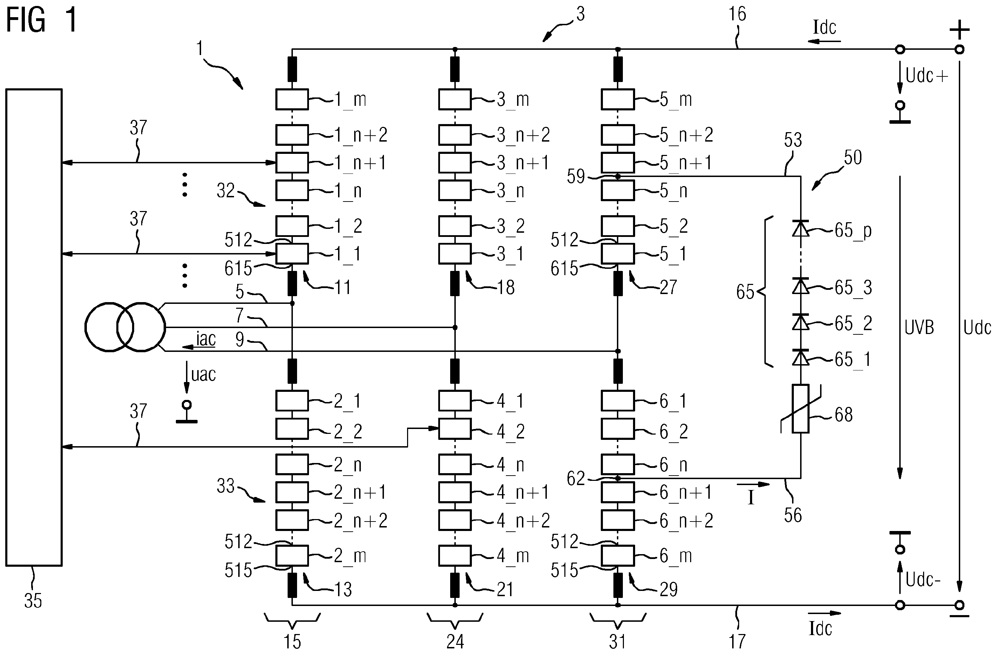

In Figur 1 ist ein Ausführungsbeispiel einer Anordnung 1 mit einem Stromrichter 3 in Form eines modularen Multilevelstromrichters 3 dargestellt. Dieser Multilevelstromrichter 3 weist einen ersten Wechselspannungsanschluss 5, einen zweiten Wechselspannungsanschluss 7 und einen dritten Wechselspannungsanschluss 9 auf. Der erste Wechselspannungsanschluss 5 ist elektrisch mit einem ersten Phasenmodulzweig 11 und einem zweiten Phasenmodulzweig 13 verbunden. Der erste Phasenmodulzweig 11 und der zweite Phasenmodulzweig 13 bilden ein erstes Phasenmodul 15 des Stromrichters 3. Das dem ersten Wechselspannungsanschluss 5 abgewandte Ende des ersten Phasenmodulzweigs 11 ist mit einem ersten Gleichspannungsanschluss 16 elektrisch verbunden; das dem ersten Wechselspannungsanschluss 5 abgewandte Ende des zweiten Phasenmodulzweigs 13 ist mit einem zweiten Gleichspannungsanschluss 17 elektrisch verbunden. Der erste Gleichspannungsanschluss 16 ist ein positiver Gleichspannungsanschluss; der zweite Gleichspannungsanschluss 17 ist ein negativer Gleichspannungsanschluss.

Der zweite Wechselspannungsanschluss 7 ist mit einem Ende eines dritten Phasenmodulzweigs 18 und mit einem Ende eines vierten Phasenmodulzweigs 21 elektrisch verbunden. Der dritte Phasenmodulzweig 18 und der vierte Phasenmodulzweig 21 bilden ein zweites Phasenmodul 24. Der dritte Wechselspannungsanschluss 9 ist mit einem Ende eines fünften Phasenmodulzweigs 27 und mit einem Ende eines sechsten Phasenmodulzweigs 29 elektrisch verbunden. Der fünfte Phasenmodulzweig 27 und der sechste Phasenmodulzweig 29 bilden ein drittes Phasenmodul 31.

Das dem zweiten Wechselspannungsanschluss 7 abgewandte Ende des dritten Phasenmodulzweigs 18 und das dem dritten Wechselspannungsanschluss 9 abgewandte Ende des fünften Phasenmodulzweigs 27 sind mit dem ersten Gleichspannungsanschluss 16 elektrisch verbunden. Das dem zweiten Wechselspannungsanschluss 7 abgewandte Ende des vierten Phasenmodulzweigs 21 und das dem dritten Wechselspannungsanschluss 9 abgewandte Ende des sechsten Phasenmodulzweigs 29 sind mit dem zweiten Gleichspannungsanschluss 17 elektrisch verbunden. Der erste Phasenmodulzweig 11, der dritte Phasenmodulzweig 18 und der fünfte Phasenmodulzweig 27 bilden ein positivseitiges Stromrichterteil 32; der zweite Phasenmodulzweig 13, der vierte Phasenmodulzweig 21 und der sechste Phasenmodulzweig 29 bilden ein negativseitiges Stromrichterteil 33.

Jeder Phasenmodulzweig weist eine Mehrzahl von Modulen (1_1, 1_2, 1_3, 1_4 ... 1_m; 2_1 ... 2_m; usw.) auf, welche (mittels ihrer Modulanschlüsse) elektrisch in Reihe geschaltet sind. Solche Module werden auch als Submodule bezeichnet. Im Ausführungsbeispiel der Figur 1 weist jeder Phasenmodulzweig m Module auf. Die Anzahl der mittels ihrer Modulanschlüsse elektrisch in Reihe geschalteten Module kann sehr verschieden sein, mindestens sind drei Module in Reihe geschaltet, es können aber auch beispielsweise 50, 100 oder mehr Module elektrisch in Reihe geschaltet sein. Im Ausführungsbeispiel ist m = 36: der erste Phasenmodulzweig 11 weist also 36 Module 1_1, 1_2, 1_3, ... 1_36 auf. Die anderen Phasenmodulzweige 13, 18, 21, 27 und 29 sind gleichartig aufgebaut.

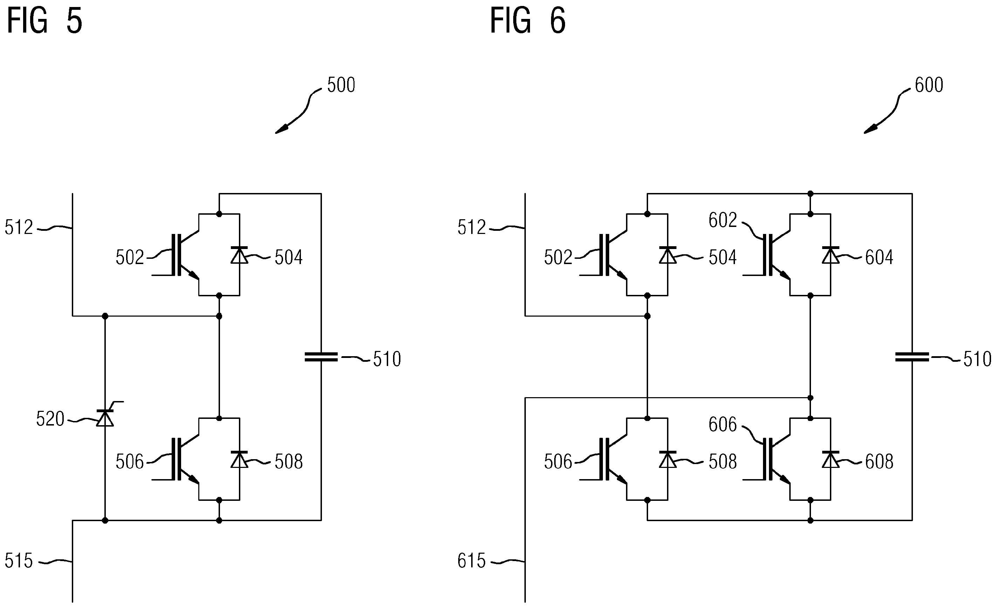

Jeder Phasenmodulzweig 11, 13, 18, 21, 27, 29 weist Module ersten Typs und Module zweiten Typs auf. Module ersten Typs sind Module, die zwischen ihrem ersten elektrischen Modulanschluss und ihrem zweiten elektrischen Modulanschluss eine Spannung ausschließlich einer Polarität oder die Spannung Null ausgeben können (abhängig von der Ansteuerung der Module). Module ersten Typs sind beispielsweise sogenannte Halbbrückenmodule, wie sie in Figur 5 dargestellt sind.

Module zweiten Typs sind Module, die zwischen ihrem ersten elektrischen Modulanschluss und ihrem zweiten elektrischen Modulanschluss eine Spannung einer Polarität, eine Spannung entgegengesetzter Polarität oder die Spannung Null ausgeben können (abhängig von der Ansteuerung der Module). Module zweiten Typs sind beispielsweise sogenannte Vollbrückenmodule, wie sie in Figur 6 dargestellt sind.

Jedes Phasenmodul 15, 24, 31 weist Module ersten Typs 500 und Module zweiten Typs 600 auf; jedes Phasenmodul weist also eine Mehrzahl von Modulen auf. Zumindest einige Module ersten Typs und zweiten Typs sind elektrisch in Reihe geschaltet. Zumindest einige Module der Mehrzahl von Modulen sind also elektrisch in Reihe geschaltet. Jeder Phasenmodulzweig 11, 13, 18, 21, 27, 29 weist n Module zweiten Typs auf (Module 1_1 ... 1_n; 2_1 ... 2_n usw.). Weiterhin weist jeder Phasenmodulzweig 11, 13, 18, 21, 27, 29 (m-n) Module ersten Typs auf (Module 1_n+1 ... 1_m; 2_n+1 ... 2_m usw.). Die Module zweiten Typs sind benachbart zu dem Wechselspannungsanschluss des Phasenmoduls angeordnet. Die Module ersten Typs sind benachbart zu dem ersten und/oder dem zweiten Gleichspannungsanschluss des Phasenmoduls angeordnet. Die Module zweiten Typs bilden in jedem Phasenmodul jeweils eine (mittige) elektrische Reihenschaltung (am Wechselspannungsanschluss); die Module ersten Typs bilden in jedem Phasenmodul jeweils zwei elektrische Reihenschaltungen (eine erste elektrische Reihenschaltung am ersten Gleichspannungsanschluss und eine zweite elektrische Reihenschaltung am zweiten Gleichspannungsanschluss). Insbesondere können in den Phasenmodulen Induktivitäten (Drosselspulen) angeordnet sein, beispielsweise an den Wechselspannungsanschlüssen oder an den Gleichspannungsanschlüssen.

Im linken Bereich der Figur 1 ist schematisch eine Steuereinrichtung 35 für die Module 1_1 bis 6_m dargestellt. Von dieser zentralen Steuereinrichtung 35 werden optische Nachrichten bzw. optische Signale über eine optische Kommunikationsverbindung 37 (zum Beispiel über einen Lichtwellenleiter) zu den einzelnen Modulen übertragen. Die Nachrichtenübertragung zwischen der Steuereinrichtung und einem Modul ist jeweils symbolhaft durch eine Linie 37 dargestellt; die Richtung der Nachrichtenübertragung ist durch die Pfeilspitzen an den Linien 37 symbolisiert. Dies ist am Beispiel der Module 1_1, 1_(n+1) und 4_2 dargestellt; zu den anderen Modulen werden auf die gleiche Art und Weise Nachrichten gesendet beziehungsweise von diesen Modulen Nachrichten empfangen. Beispielsweise sendet die Steuereinrichtung 35 an die einzelnen Module jeweils einen Sollwert für den Schaltzustand der elektronischen Schaltelemente.

Eine Spannungsbegrenzungseinrichtung 50 ist elektrisch mit einem der Phasenmodule 15, 24 oder 31 verbunden. Im Ausführungsbeispiel der Figur 1 ist die Spannungsbegrenzungseinrichtung 50 mit dem dritten Phasenmodul 31 elektrisch verbunden. Die Spannungsbegrenzungseinrichtung 50 überbrückt die Module zweiten Typs des dritten Phasenmoduls 31. Mit anderen Worten gesagt, ist die Spannungsbegrenzungseinrichtung 50 parallel zu den Modulen zweiten Typs geschaltet.

Die Spannungsbegrenzungseinrichtung 50 weist einen ersten Anschluss 53 und einen zweiten Anschluss 56 auf. Der erste Anschluss 53 der Spannungsbegrenzungseinrichtung 50 ist elektrisch verbunden mit einem Verbindungspunkt 59 (erster Verbindungspunkt 59) zwischen den Modulen ersten Typs und den Modulen zweiten Typs des einen Phasenmodulzweigs 27 des Phasenmoduls 31. Der zweite Anschluss 56 der Spannungsbegrenzungseinrichtung 50 ist elektrisch verbunden mit einem Verbindungspunkt 62 (zweiter Verbindungspunkt 62) zwischen den Modulen ersten Typs und den Modulen zweiten Typs des anderen Phasenmodulzweigs 29 des Phasenmoduls 31. Die Spannungsbegrenzungseinrichtung 50 überbrückt also die Module zweiten Typs des dritten Phasenmoduls 31.

Die Spannungsbegrenzungseinrichtung 50 ist im Ausführungsbeispiel zwischen den ersten Verbindungspunkt 59 und den zweiten Verbindungspunkt 62 geschaltet. Diese Spannungsbegrenzungseinrichtung 50 verbindet den ersten Verbindungspunkt 59 und den zweiten Verbindungspunkt 62. Damit ist die Spannungsbegrenzungseinrichtung 50 zwischen den ersten Gleichspannungsanschluss 16 und den zweiten Gleichspannungsanschluss 17 geschaltet. Die Spannungsbegrenzungseinrichtung 50 begrenzt also die Spannung der einen Polarität zwischen dem ersten Verbindungspunkt 59 und dem zweiten Verbindungspunkt 62. Damit begrenzt die Spannungsbegrenzungseinrichtung 50 auch die Spannung der einen Polarität zwischen dem ersten Gleichspannungsanschluss 16 und dem zweiten Gleichspannungsanschluss 17.

Die Spannungsbegrenzungseinrichtung 50 weist Halbleiterventile 65_1, 65_2, 65_3 usw. bis 65_p auf, die elektrisch in Reihe geschaltet sind. Prinzipiell würde die Spannungsbegrenzungseinrichtung 50 auch bereits mit einem einzigen Halbleiterventil 65_1 funktionieren. Die Halbleiterventile 65_1, 65_2, 65_3 ... 65_p bilden ein Gesamt-Halbleiterventil 65 mit einer höheren Sperrspannung als die einzelnen Halbleiterventile.

Im Ausführungsbeispiel beträgt p = 50, es sind also 50 Halbleiterventile elektrisch in Reihe geschaltet. In anderen Ausführungsbeispielen können aber durchaus größere Anzahlen von Halbleiterventilen elektrisch in Reihe geschaltet sein, beispielsweise 100 oder 200. Falls nur eine geringe Sperrspannung benötigt wird, kann auch eine geringere Anzahl an Halbleiterventilen ausreichend sein.

Die Halbleiterventile 65_1, 65_2, 65_3 ... 65_p sind im Ausführungsbeispiel als Dioden 65_1, 65_2, 65_3 ... 65_p ausgestaltet. Konkret sind im Ausführungsbeispiel der Figur 1 p Dioden elektrisch in Reihe geschaltet und bilden das Gesamt-Halbleiterventil 65.

Die Halbleiterventile 65_1, 65_2, 65_3 ... 65_p bilden eine elektrische Reihenschaltung mit einem elektrischen Widerstand 68. Bei dem Widerstand 68 kann es sich um einen linearen (ohmschen) Widerstand handeln. Der Widerstand 68 kann aber auch ein Varistor (spannungsabhängiger Widerstand) sein, insbesondere ein Metalloxid-Varistor. Der Widerstand 68 kann insbesondere ein Überspannungsableiter sein. Durch den Überspannungsableiter 68 wird erreicht, dass die Spannungsbegrenzungseinrichtung 50 erst ab einer bestimmten Größe der unerwünschten negativen Spannung wirksam wird. Außerdem kann in dem Widerstand 68 bzw. dem Varistor 68 überschüssige elektrische Energie in Wärme umgesetzt werden.

Bei normalen Betriebsverhältnissen/Normalbetrieb liegt zwischen dem ersten Gleichspannungsanschluss 16 und dem zweiten Gleichspannungsanschluss 17 eine positive Spannung Udc an (das heißt, das elektrische Potenzial am ersten Gleichspannungsanschluss 16 ist größer als das elektrische Potenzial am zweiten Gleichspannungsanschluss 17).

Dann liegt auch zwischen dem ersten Verbindungspunkt 59 und dem zweiten Verbindungspunkt 62 eine positive Spannung UVB an (das heißt, das elektrische Potenzial am ersten Verbindungspunkt 59 ist größer als das elektrische Potenzial am zweiten Verbindungspunkt 62). Dann fließt aufgrund der Ventilwirkung der Halbleiterventile 65_1 ... 65_p kein elektrischer Strom durch die Spannungsbegrenzungseinrichtung 50. Dadurch wird bei Normalbetrieb die an den Gleichspannungsanschlüssen 16, 17 anliegende (positive) Gleichspannung Udc nicht verändert.

Wenn jedoch beispielsweise in einer an die Gleichspannungsanschlüsse 16, 17 angeschlossenen Gleichstromübertragungsstrecke ein singuläres Ereignis oder ein Fehler auftritt, dann kann es dazu kommen, dass zwischen dem ersten Gleichspannungsanschluss 16 und dem zweiten Gleichspannungsanschluss 17 eine Spannung U umgekehrter Polarität auftritt (negative Spannung). Derartige negative Spannungen können beispielsweise aufgrund von unerwünschten Schwingungen in der Gleichstromübertragungsstrecke auftreten. In diesem Fall ist das elektrische Potenzial am ersten Gleichspannungsanschluss 16 zumindest zeitweise kleiner als das elektrische Potenzial am zweiten Gleichspannungsanschluss 17. Dann ist auch das elektrische Potenzial am ersten Verbindungspunkt 59 zumindest zeitweise kleiner als das elektrische Potenzial am zweiten Verbindungspunkt 62.

Dann fließt ein Strom I von dem zweiten Gleichspannungsanschluss 17 über den zweiten Verbindungspunkt 62 durch den Widerstand 68 und die Halbleiterventile 65_1 ... 65_p zu dem ersten Verbindungspunkt 59 und dann zu dem ersten Gleichspannungsanschluss 16. Dadurch wird die unerwünschte negative Spannung U zwischen den beiden Gleichspannungsanschlüssen 16 und 17 mit einer Last versehen und dadurch begrenzt/gedämpft. Im Extremfall wird die unerwünschte negative Spannung U kurzgeschlossen. Wenn der Widerstand 68 ein Überspannungsableiter ist, dann fließt der Strom I erst dann durch die Spannungsbegrenzungseinrichtung 50, wenn die negative Spannung so groß ist, dass die Ansprechspannung des Überspannungsableiters überschritten wird.

Abhängig von der maximalen Stromänderungsgeschwindigkeit des durch die Spannungsbegrenzungseinrichtung 50 fließenden Stroms I kann es gegebenenfalls vorteilhaft sein, schnelle Dioden (z.B. IGCT-Dioden) einzusetzen. Die Halbleiterventile können insbesondere anhand ihres i²t-Wertes ausgewählt werden.

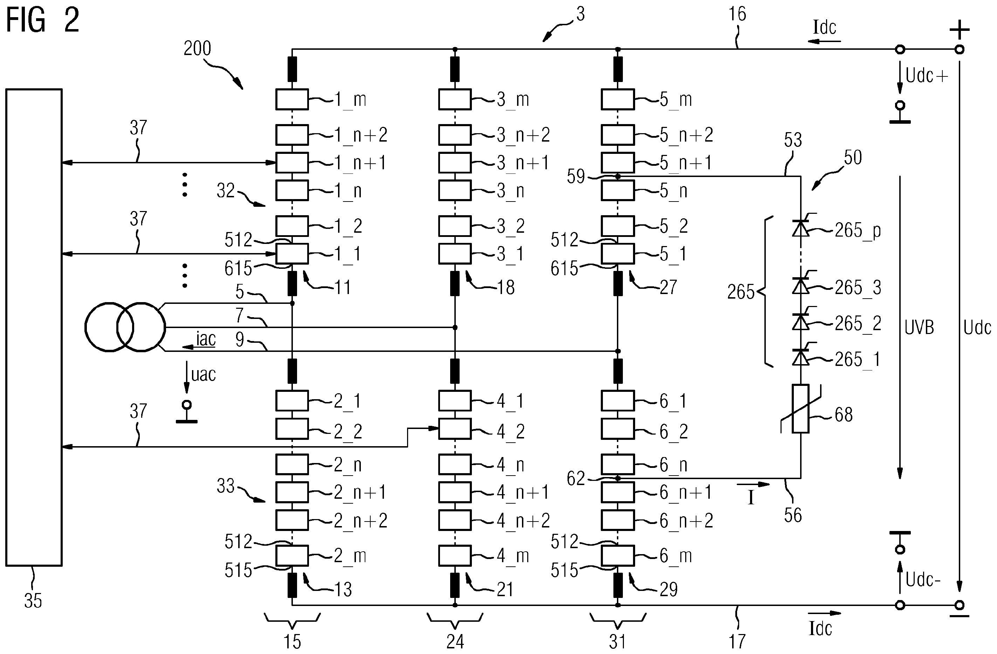

In Figur 2 ist ein weiteres Ausführungsbeispiel einer Anordnung 200 dargestellt. Diese Anordnung 200 unterscheidet sich von der Anordnung 1 der Figur 1 lediglich dadurch, dass die Halbleiterventile als Thyristoren 265_1 ... 265_p ausgestaltet sind. Bei Auftreten einer unerwünschten negativen Spannung werden diese Thyristoren 265_1 ... 265_p mittels einer (nicht dargestellten) Ansteuerschaltung im Wesentlichen gleichzeitig angesteuert, so dass diese dann einen leitenden Zustand einnehmen und einen Stromfluss I von dem zweiten Verbindungspunkt 62 zu dem ersten Verbindungspunkt 59 (und damit von dem zweiten Gleichspannungsanschluss 17 zu dem ersten Gleichspannungsanschluss 16) ermöglichen. Die Thyristoren können dabei eine parallelgeschaltete Schutzbeschaltung mit einem RC-Glied aufweisen. Auch die in Figur 1 dargestellten Dioden können eine derartige Schutzbeschaltung aufweisen. Anstelle der Thyristoren können auch andere einschaltbare Halbleiterventile verwendet werden, beispielsweise Transistoren.

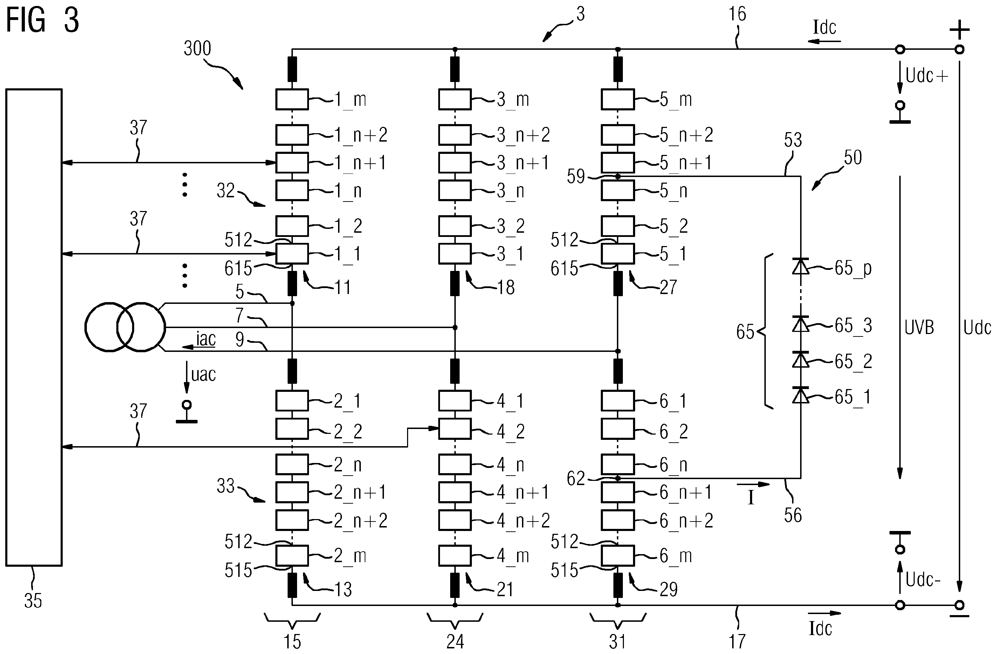

In Figur 3 ist ein weiteres Ausführungsbeispiel einer Anordnung 300 dargestellt. Diese Anordnung 300 unterscheidet sich vom Ausführungsbeispiel der Figur 1 lediglich dadurch, dass der Widerstand 68 entfällt. Die Spannungsbegrenzungseinrichtung 50 weist also lediglich die Halbleiterventile 65_1 ... 65_p auf. In diesem Fall wird die unerwünschte negative Spannung auf die Summe der Durchlassspannungen der Halbleiterventile 65_1 ... 65_p begrenzt. Der durch die Spannungsbegrenzungseinrichtung 50 fließende Strom I wird nicht durch den Widerstand 68 begrenzt, so dass die Halbleiterventile 65_1 ... 65_p ausreichend robust dimensioniert sein müssen. Auch bei dem Ausführungsbeispiel der Figur 2 kann der Widerstand bzw. Überspannungsableiter 68 weggelassen werden.

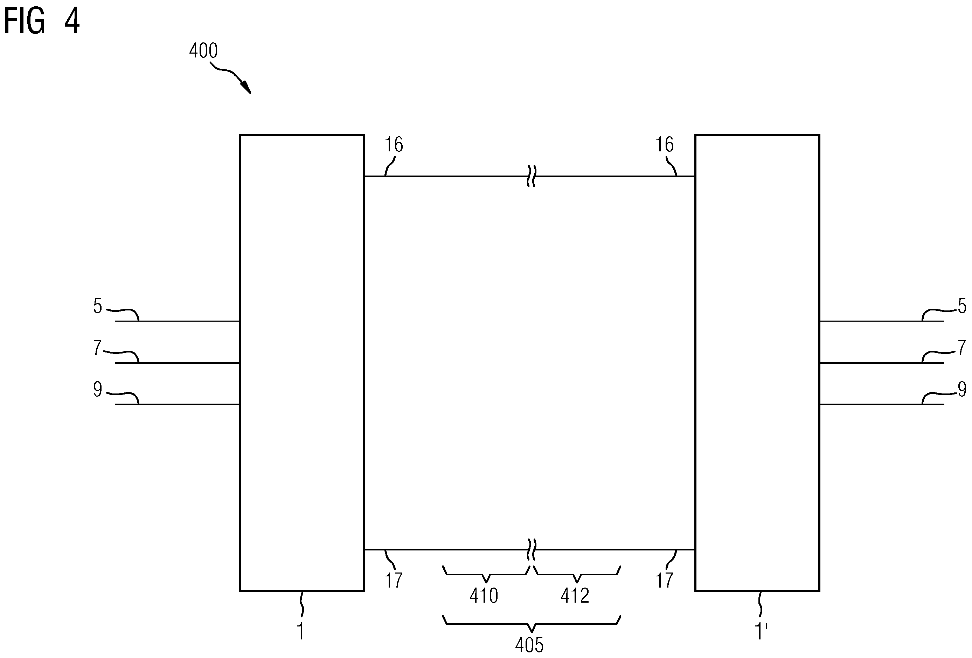

In Figur 4 ist ein Ausführungsbeispiel einer Hochspannungs-Gleichstrom-Übertragungsanlage 400 dargestellt. Diese Hochspannungs-Gleichstrom-Übertragungsanlage 400 weist eine Anordnung 1 mit einem Multilevelstromrichter 3 und einer Spannungsbegrenzungseinrichtung 50 gemäß Figur 1 sowie eine Gleichstromübertragungsstrecke 405 auf. Die Gleichstromübertragungsstrecke 405 weist im Ausführungsbeispiel der Figur 4 zwei verschiedene Leiterarten auf: ein erster Teil 410 der Gleichstromübertragungsstrecke 405 ist als Freileitung 410 (erste Leiterart 410) ausgestaltet; ein zweiter Teil 412 der Gleichstromübertragungsstrecke 405 ist als ein Kabel 412 ausgestaltet (zweite Leiterart 412), insbesondere als ein kunststoffisoliertes Kabel 412. Das Kabel 412 kann auch ein anderes Kabel sein, insbesondere ein ölisoliertes Kabel oder ein masseisoliertes Kabel. An dem der Anordnung 1 abgewandten Ende der Gleichstromübertragungsstrecke 405 kann eine weitere Anordnung 1' mit einem weiteren Multilevelstromrichter 3 und einer optionalen weiteren Spannungsbegrenzungseinrichtung 50 angeordnet sein.

Die beiden Anordnungen 1 und 1' (und damit die beiden Stromrichter 3) sind gleichspannungsseitig über die Hochspannungs-Gleichstromübertragungsstrecke 405 elektrisch miteinander verbunden. Mittels einer derartigen Hochspannungs-Gleichstrom-Übertragungsanlage 400 kann elektrische Energie über weite Entfernungen übertragen werden; die Hochspannungs-Gleichstromübertragungsstrecke 405 weist dann eine entsprechende Länge auf. Eine solche Hochspannungs-Gleichstrom-Übertragungsanlage kann auch eine Multi-Terminal-Hochspannungs-Gleichstrom-Übertragungsanlage sein.

Bei dem modularen Multilevelstromrichter 3 oder dem weiteren modularen Multilevelstromrichter 3 kann beispielsweise der erste Gleichspannungsanschluss 16 oder der zweite Gleichspannungsanschluss 17 geerdet sein (insbesondere bei einer Bipol-Konfiguration). Diese Erdung kann unmittelbar erfolgen ("harte Erdung") oder mittelbar beispielsweise über einen Ableiter oder eine Impedanz. Alternativ können der erste Gleichspannungsanschluss und der zweite Gleichspannungsanschluss ungeerdet sein (insbesondere bei einer Symmetrischer-Monopol-Konfiguration); die Erdung erfolgt dann auf der Wechselspannungsseite des Multilevelstromrichters. Ein Sternpunkt des Wechselstromnetzes kann geerdet sein; insbesondere ein Sternpunkt eines wechselspannungsseitigen Transformators oder ein zusätzlich geschaffener hochimpedanter Sternpunkt ("künstlicher Sternpunkt").

In Figur 5 ist ein Ausführungsbeispiel eines Moduls 500 des modularen Multilevelstromrichters 3 dargestellt. Beim Modul 500 handelt es sich um ein "Modul ersten Typs". Bei dem Modul 500 kann es sich beispielsweise um eines der in Figur 1 dargestellten Module 1_(n+1) ... 1_m bis 5_(n+1) ... 5_m und/oder 6_(n+1) ... 6_m handeln.

Das Modul 500 ist als ein Halbbrücken-Modul 500 ausgestaltet. Das Modul 500 weist ein erstes (abschaltbares) elektronisches Schaltelement 502 (erstes abschaltbares Halbleiterventil 502) mit einer ersten antiparallel geschalteten Diode 504 auf. Weiterhin weist das Modul 500 ein zweites (abschaltbares) elektronisches Schaltelement 506 (zweites abschaltbares Halbleiterventil 506) mit einer zweiten antiparallel geschalteten Diode 508 sowie einen elektrischen Energiespeicher 510 in Form eines Kondensators 510 auf. Das erste elektronische Schaltelement 502 und das zweite elektronische Schaltelement 506 sind jeweils als ein IGBT (insulated-gate bipolar transistor) ausgestaltet. Das erste elektronische Schaltelement 502 ist elektrisch in Reihe geschaltet mit dem zweiten elektronischen Schaltelement 506. Am Verbindungspunkt zwischen den beiden elektronischen Schaltelementen 502 und 506 ist ein erster Modulanschluss 512 angeordnet. An dem Anschluss des zweiten elektronischen Schaltelements 506, welcher dem Verbindungspunkt gegenüberliegt, ist ein zweiter Modulanschluss 515 angeordnet. Der zweite Modulanschluss 515 ist weiterhin mit einem ersten Anschluss des Energiespeichers 510 elektrisch verbunden; ein zweiter Anschluss des Energiespeichers 510 ist elektrisch verbunden mit dem Anschluss des ersten elektronischen Schaltelements 502, der dem Verbindungspunkt gegenüberliegt.

Der Energiespeicher 510 ist also elektrisch parallel geschaltet zu der Reihenschaltung aus dem ersten elektronischen Schaltelement 502 und dem zweiten elektronischen Schaltelement 506. Durch entsprechende Ansteuerung des ersten elektronischen Schaltelements 502 und des zweiten elektronischen Schaltelements 506 durch eine Steuereinrichtung des Stromrichters kann erreicht werden, dass zwischen dem ersten Modulanschluss 512 und dem zweiten Modulanschluss 515 entweder die Spannung des Energiespeichers 510 ausgegeben wird oder keine Spannung ausgegeben wird (d.h. eine Nullspannung ausgegeben wird). Das Modul ersten Typs 500 ist also imstande, zwischen dem ersten Modulanschluss 512 und dem zweiten Modulanschluss 515 entweder eine Spannung ausschließlich einer Polarität oder die Spannung Null (Nullspannung) auszugeben. Durch Zusammenwirken der Module der einzelnen Phasenmodulzweige kann so die jeweils gewünschte Ausgangsspannung des Stromrichters erzeugt werden.

Der Energiespeicher kann ein Kondensator sein (oder eine Zusammenschaltung aus mehreren Kondensatoren); die Spannung des Energiespeichers ist dann die Kondensatorspannung (oder die Gesamtspannung der Zusammenschaltung).

Optional kann zwischen den ersten Modulanschluss 512 und den zweiten Modulanschluss 515 ein zusätzliches Halbleiterventil 520 geschaltet sein. Dieses zusätzliches Halbleiterventil 520 kann ein Überbrückungs-Schaltelement 520 sein. Auf eine Ansteuerung hin überbrückt das Überbrückungs-Schaltelement 520 das Modul 500. Im Ausführungsbeispiel ist das Überbrückungs-Schaltelement 520 als ein Thyristor 520 ausgestaltet, also als ein einschaltbares Überbrückungs-Schaltelement 520. Das Überbrückungs-Schaltelement 520 ist im Ausführungsbeispiel so geschaltet, dass es (im eingeschalteten Zustand) einen Strom führen kann, der gleichsinnig und parallel zu dem durch die Diode 508 (zweite antiparallel geschaltete Diode 508) fließendem Strom fließt. Dadurch wird im Falle des Auftretens einer zu begrenzenden negativen Spannung die Diode 508 entlastet. In diesem Fall ist also das Überbrückungs-Schaltelement 520 einzuschalten/zu schließen; im Ausführungsbeispiel wird also bei Auftreten einer zu begrenzenden negativen Spannung der Thyristor 520 eingeschaltet/gezündet. Im DC-Fehlerfall kann also die aktive Einschaltung/Zuschaltung des Überbrückungs-Schaltelements 520 vorteilhaft sein. Als Alternative zu dem Überbrückungs-Schaltelement 520 kann auch die zweite antiparallel geschaltete Diode 508 entsprechend robust ausgeführt werden und/oder die zweite antiparallel geschaltete Diode 508 kann mittels einer oder mehrerer weiterer parallelgeschalteter Dioden (zum Beispiel Press-Pack Dioden) verstärkt werden. In diesem Fall ist das zusätzliche Halbleiterventil 520 also mindestens eine Diode. Das zusätzliche Halbleiterventil 520 kann aber auch anders ausgestaltet sein, beispielsweise als ein IGCT oder ein GTO. Das zusätzliche Halbleiterventil 520 ist gleichsinnig parallel geschaltet zu der zweiten antiparallel geschaltete Diode 508 bzw. antiparallel geschaltet zu dem zweiten elektronischen Schaltelement 506.

In Figur 6 ist ein weiteres Ausführungsbeispiel eines Moduls 600 des modularen Multilevelstromrichters 3 dargestellt. Beim Modul 600 handelt es sich um ein "Modul zweiten Typs". Bei dem Modul 600 kann es sich beispielsweise um eines der in Figur 1 dargestellten Module 1_1 ... 1_n, 2_1 ... 2_n bis 6_1 ... 6_n handeln.

Neben den bereits aus Figur 5 bekannten ersten elektronischen Schaltelement 502, zweiten elektronischen Schaltelement 506, erster Freilaufdiode 504, zweiter Freilaufdiode 508 und Energiespeicher 510 weist das in Figur 6 dargestellte Modul 600 ein drittes elektronisches Schaltelement 602 mit einer antiparallel geschalteten dritten Freilaufiode 604 sowie ein viertes elektronisches Schaltelement 606 mit einer vierten antiparallel geschalteten Freilaufdiode 608 auf. Das dritte elektronische Schaltelement 602 und das vierte elektronische Schaltelement 606 sind jeweils als ein IGBT ausgestaltet. Im Unterschied zur Schaltung der Figur 5 ist der zweite Modulanschluss 615 nicht mit dem zweiten elektronischen Schaltelement 506 elektrisch verbunden, sondern mit einem Mittelpunkt (Verbindungspunkt) einer elektrischen Reihenschaltung aus dem dritten elektronischen Schaltelement 602 und dem vierten elektronischen Schaltelement 606.

Das Modul der Figur 6 ist ein sogenanntes Vollbrücken-Modul 600. Dieses Vollbrücken-Modul 600 zeichnet sich dadurch aus, dass bei entsprechender Ansteuerung der vier elektronischen Schaltelemente zwischen dem ersten Modulanschluss 512 und dem zweiten Modulanschluss 615 wahlweise entweder die positive Spannung des Energiespeichers 510, die negative Spannung des Energiespeichers 510 oder eine Spannung des Wertes Null (Nullspannung) ausgegeben werden kann. Somit kann also mittels des Moduls zweiten Typs 600 die Polarität der Ausgangsspannung umgekehrt werden. Das Modul zweiten Typs 600 ist also imstande, zwischen dessen ersten elektrischen Modulanschluss 512 und dessen zweiten elektrischen Modulanschluss 615 eine Spannung einer Polarität, eine Spannung entgegengesetzter Polarität oder die Spannung Null auszugeben.

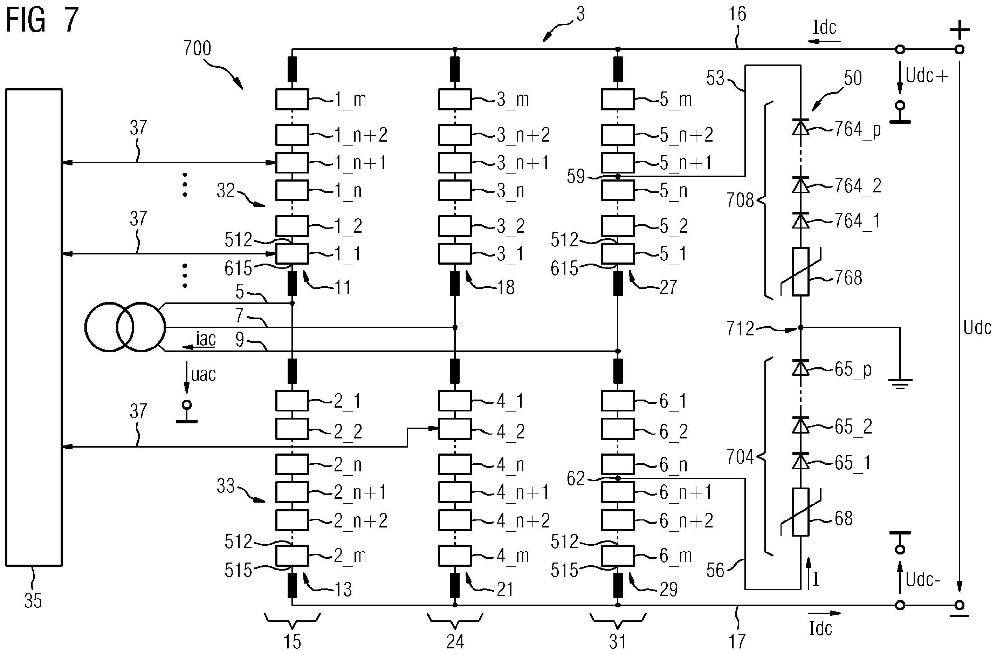

In Figur 7 ist ein weiteres Ausführungsbeispiel einer Anordnung 700 dargestellt. Diese Anordnung 700 unterscheidet sich von der Anordnung 1 der Figur 1 lediglich dadurch, dass die Spannungsbegrenzungseinrichtung 50 eine erste Reihenschaltung 704 aus den Halbleiterventilen 65_1, 65_2, ... 65_p und dem elektrischen Widerstand 68 und eine zweite Reihenschaltung 708 aus Halbleiterventilen 764_1, 764_2, ... 764_p und einem elektrischen Widerstand 768 aufweist. Ein erster Anschluss der ersten Reihenschaltung 704 ist mit dem zweiten Verbindungspunkt 62 verbunden. Ein zweiter Anschluss der ersten Reihenschaltung 704 ist mit einem ersten Anschluss der zweiten Reihenschaltung 708 verbunden. Ein zweiter Anschluss der zweiten Reihenschaltung 708 ist mit dem ersten Verbindungspunkt 59 verbunden. Die Verbindungsstelle/der Verbindungspunkt 712 (Mitten-Verbindungspunkt 712) zwischen der ersten Reihenschaltung 704 und der zweiten Reihenschaltung 708 ist geerdet. Diese Anordnung 700 ist insbesondere bei einer Symmetrischer-Monopol-Konfiguration einer Hochspannungs-Gleichstrom-Übertragungsanlage mit Vorteil einsetzbar.

In den Figuren ist die Spannungsbegrenzungseinrichtung 50 beispielhaft an dem dritten Phasenmodul 31 angeordnet. In anderen Ausführungsbeispielen kann die Spannungsbegrenzungseinrichtung 50 aber auch an einem anderen Phasenmodul angeordnet sein. In wieder einem anderen Ausführungsbeispiel kann die Spannungsbegrenzungseinrichtung 50 auch wahlweise (umschaltbar) mit verschiedenen Phasenmodulen verbindbar sein. Es kann aber auch einem, mehreren oder allen Phasenmodulen jeweils eine eigene Spannungsbegrenzungseinrichtung (fest) zugeordnet sein.

Die beschriebene Anordnung und das beschriebene Verfahren weisen eine Reihe von Vorteilen auf. Polaritätsabhängig kann die über den Modulen zweiten Typs eines Phasenmoduls auftretende Spannung (also die zwischen dem ersten Verbindungspunkt 59 und dem zweiten Verbindungspunkt 62 auftretende Spannung) begrenzt bzw. gedämpft werden. Dadurch wird auch die zwischen dem ersten Gleichspannungsanschluss 16 und dem zweiten Gleichspannungsanschluss 17 auftretende Spannung polaritätsabhängig begrenzt bzw. gedämpft.

Dadurch wird vermieden, dass der Multilevelstromrichter mit zusätzlichen Modulen ausgestattet werden muss, um die negative Spannung aufzunehmen. Dadurch können Kostenvorteile beim Multilevelstromrichter realisiert werden. Dies ist insbesondere vorteilhaft bei Multilevelstromrichtern, welche Module aufweisen, die nur eine Spannung einer Polarität bereitstellen können (zum Beispiel Halbbrückenmodule) und auch Module, welche Spannungen beider Polaritäten bereitstellen können (beispielsweise Vollbrückenmodule). Bei derartigen Stromrichtern kann insbesondere die Anzahl von Vollbrückenmodulen klein gehalten werden, was zu Kostenvorteilen führt. Derartige Vollbrückenmodule wären nämlich notwendig, um die im Fehlerfall auftretenden negativen Spannungen bereitzustellen. Mit anderen Worten gesagt, wird durch die Spannungsbegrenzungseinrichtung vorteilhafterweise der Stromrichter von der Gleichstromübertragungsstrecke entkoppelt.

Bei der beschriebenen Anordnung ist parallel zu den Modulen zweiten Typs (und damit mittelbar zwischen die Gleichspannungsanschlüsse des Multilevelstromrichters) die polaritätsabhängige Spannungsbegrenzungseinrichtung geschaltet, welche eine polaritätsabhängige Spannungsbegrenzung durchführt. Dadurch wird der Maximalwert der (unerwünschten) negativen Spannung begrenzt, wodurch der Multilevelstromrichter geschützt wird. Eine Überdimensionierung des Multilevelstromrichters (durch zusätzliche Module) wird vorteilhafterweise vermieden. Eine derartige polaritätsabhängige Spannungsbegrenzungseinrichtung kann insbesondere als eine Reihenschaltung aus Halbleiterventilen und einem elektrischen Widerstand (insbesondere einem Überspannungsableiter) realisiert werden. Optional kann der Überspannungsableiter jedoch auch weggelassen werden, so dass ausschließlich eine Reihenschaltung von Halbleiterventilen zum Einsatz kommt. Die Spannungsbegrenzungseinrichtung 50 kann auch als eine spannungsasymmetrische Spannungsbegrenzungseinrichtung oder als ein spannungsasymmetrischer Ableiter bezeichnet werden, insbesondere geeignet für Hochspannungsgleichstrom-übertragungen mit gemischten Gleichstromübertragungsstrecken. Bei derartigen gemischten Gleichstromübertragungsstrecken können beispielsweise durch Reflektionen zwischen den verschiedenen Leiterarten (insbesondere durch Reflektionen zwischen einer Freileitung und einem Kabel) unerwünschte hohe negative Spannungen entstehen. Gerade bei einem Kabel kann die polaritätsabhängige Spannungsbegrenzungseinrichtung mit Vorteil eingesetzt werden, da Kabel empfindlich gegenüber einer plötzlichen Spannungsumkehrung sind.

Die Spannungsbegrenzungseinrichtung 50 könnte auch unmittelbar zwischen den ersten Gleichspannungsanschluss 16 und den zweiten Gleichspannungsanschluss 17 geschaltet sein. Die Spannungsbegrenzungseinrichtung 50 könnte also unmittelbar/direkt zwischen die gleichspannungsseitigen Stromrichteranschlüsse geschaltet sein. Eine derartige Anordnung ist in der internationalen Patentanmeldung mit dem Anmeldeaktenzeichen PCT/EP2019/051251 beschrieben. Allerdings bestimmt in diesem Fall die an dem Stromrichter auftretende Gleichspannung (also die nominelle Spannung der Gleichstromstrecke) die Spannungsbelastung der Spannungsbegrenzungseinrichtung 50 und damit die Anzahl der in Reihe zu schaltenden Halbleiterventile der Spannungsbegrenzungseinrichtung 50. Es können dabei durchaus mehrere Hundert Halbleiterventile notwendig sein, um die notwendige Spannungsfestigkeit zu erreichen.

Demgegenüber hat die hier beschriebene Lösung den Vorteil, dass bei der Spannungsbegrenzungseinrichtung 50 weniger in Reihe zu schaltenden Halbleiterventile notwendig sind. Der Grund dafür ist, dass die in den Modulen ersten Typs vorhandene zweite antiparallel geschaltete Diode 508 (bzw. das Überbrückungs-Schaltelement 520 oder die zu der zweiten antiparallel geschalteten Diode 508 parallelgeschalteten Dioden (Entlastungsdioden)) jeweils einen Teil der Spannung aufnehmen kann. Es kann also ein Teil der Bauelemente der Module ersten Typs mehrfach verwendet werden: erstens für die übliche Nutzung in dem Modul ersten Typs und zweitens zur spannungsmäßigen Entlastung der Spannungsbegrenzungseinrichtung 50. Diese Bauelemente der Module ersten Typs können also einen Teil der Funktionalität der Spannungsbegrenzungseinrichtung 50 realisieren (insbesondere Blockierspannung bereitstellen).

Die Anzahl der in Reihe zu schaltender Halbleiterventile der Spannungsbegrenzungseinrichtung 50 kann daher in der Praxis insbesondere um ca. 15% reduziert werden, unter speziellen Randbedingungen sogar um einen noch höheren Anteil. In Abhängigkeit vom Modulationsgrad des Stromrichters und von dem Verhältnis der Anzahl der Module ersten Typs zu den Modulen zweiten Typs kann die Gleichspannungsbelastung der Halbleiterventile der Spannungsbegrenzungseinrichtung 50 auf Werte von beispielsweise zwischen 32% und 55% reduziert werden, was eine noch stärkere Reduzierung der Anzahl der in Reihe zu schaltender Halbleiterventile der Spannungsbegrenzungseinrichtung 50 ermöglicht. (Der Modulationsgrad beschreibt bei dem Stromrichter das Verhältnis zwischen der Größe der Wechselspannung (insbesondere der Amplitude ûac der Wechselspannung) und der Größe der Gleichspannung Udc. Beispielsweise kann für den Modulationsgrad M gelten M = 2ûac/Udc.)

Dadurch ergeben sich deutliche Kostenvorteile. Durch die geringere Anzahl an notwendigen Halbleiterventilen eröffnet sich die Möglichkeit für weitere Optimierungen. Insbesondere kann der Stromrichter optimal im Hinblick auf die Gesamtkosten ausgelegt werden; die Wirtschaftlichkeit des Stromrichters kann deutlich verbessert werden.

Es wurde eine Anordnung und ein Verfahren beschrieben, mit denen bei einem Multilevelstromrichter eine polaritätsabhängige Spannungsbegrenzung durchgeführt werden kann.

## Patentansprüche

1. Anordnung mit einem Multilevelstromrichter (3), der mindestens ein Phasenmodul (31) aufweist,
- wobei das Phasenmodul (31) einen Wechselspannungsanschluss (9), einen ersten Gleichspannungsanschluss (16) und einen zweiten Gleichspannungsanschluss (17) aufweist,
- das Phasenmodul (31) eine Mehrzahl von Modulen (5_1 ... 5_m, 6_1 ... 6_m) aufweist, die jeweils einen ersten elektrischen Modulanschluss (512) und einen zweiten elektrischen Modulanschluss aufweisen (515, 615),
- die Mehrzahl von Modulen Module ersten Typs (5_(n+1) ... 5_m, 6_(n+1) ... 6_m, 500) aufweist, die an ihrem ersten elektrischen Modulanschluss (512) und ihrem zweiten elektrischen Modulanschluss (515) eine Spannung ausschließlich einer Polarität oder die Spannung Null auszugeben imstande sind,
- die Mehrzahl von Modulen Module zweiten Typs (5_1 ... 5_n, 6_1 ... 6_n, 600) aufweist, die an ihrem ersten elektrischen Modulanschluss (512) und ihrem zweiten elektrischen Modulanschluss (615) eine Spannung einer Polarität, eine Spannung entgegengesetzter Polarität oder die Spannung Null auszugeben imstande sind, und
- mit einer Spannungsbegrenzungseinrichtung (50),
**dadurch gekennzeichnet , dass**
- die Module zweiten Typs (5_1 ... 5_n, 6_1 ... 6_n, 600) benachbart zu dem Wechselspannungsanschluss (9) des Phasenmoduls (31) angeordnet sind, und die Module ersten Typs (5_(n+1) ... 5_m, 6_(n+1) ... 6_m, 500) benachbart zu dem ersten Gleichspannungsanschluss (16) und dem zweiten Gleichspannungsanschluss (17) des Phasenmoduls (31) angeordnet sind,
- die Spannungsbegrenzungseinrichtung (50) so ausgestaltet ist, dass diese nur eine über den Modulen zweiten Typs auftretende negative Spannung (UVB) begrenzt, und eine über den Modulen zweiten Typs auftretende Spannung (UVB) der entgegengesetzten Polarität im Wesentlichen unverändert lässt, und
- die Spannungsbegrenzungseinrichtung (50) mindestens ein Halbleiterventil (65_1), insbesondere eine Reihenschaltung von Halbleiterventilen (65_1 ... 65_p), aufweist.

2. Anordnung nach Anspruch 1,
wobei
- die Module jeweils mindestens ein erstes elektronisches Schaltelement (502), ein zweites elektronisches Schaltelement (506) und einen elektrischen Energiespeicher (510) aufweisen.

3. Anordnung nach Anspruch 2,
wobei
- die Module ersten Typs (500) jeweils das erste elektronische Schaltelement (502) und das zweite elektronische Schaltelement (506) in einer Halbbrückenschaltung aufweisen.

4. Anordnung nach Anspruch 2 oder 3,
wobei
- die Module ersten Typs (500) in Parallelschaltung zu dem zweiten elektronischen Schaltelement (506) ein zusätzliches Halbleiterventil (520) aufweisen, insbesondere eine Diode, ein Thyristor, ein IGCT oder ein GTO.

5. Anordnung nach einem der Ansprüche 2 bis 4,
wobei
- die Module zweiten Typs (600) jeweils das erste elektronische Schaltelement (502), das zweite elektronische Schaltelement (506), ein drittes elektronisches Schaltelement (602) und ein viertes elektronisches Schaltelement (606) in einer Vollbrückenschaltung aufweisen.

6. Anordnung nach einem der vorhergehenden Ansprüche,
wobei
- die Spannungsbegrenzungseinrichtung (50) so ausgestaltet ist, dass nur bei Auftreten der negativen Spannung (UVB) über den Modulen zweiten Typs ein Strom (I) durch die Spannungsbegrenzungseinrichtung (50) fließt.

7. Anordnung nach einem der vorhergehenden Ansprüche,
wobei
- die Reihenschaltung mindestens 50 Halbleiterventile (65_1 ... 65_p) aufweist.

8. Anordnung nach einem der vorhergehenden Ansprüche,
wobei
- das mindestens eine Halbleiterventil (65_1 ... 65_p) eine Diode (65_1), ein Thyristor (265_1), ein IGCT, ein GTO oder ein Transistor ist.

9. Anordnung nach einem der vorhergehenden Ansprüche,
wobei
- in Reihe zu dem mindestens einen Halbleiterventil (65_1 ... 65_p) ein elektrischer Widerstand (68) geschaltet ist.

10. Anordnung nach Anspruch 9,
wobei
- der elektrische Widerstand ein Varistor (68) ist.

11. Anordnung nach einem der vorhergehenden Ansprüche, wobei
- die Anordnung eine Gleichstromübertragungsstrecke (405), insbesondere eine Hochspannungs-Gleichstromübertragungsstrecke (405), aufweist, und
- der erste Gleichspannungsanschluss (16) und der zweite Gleichspannungsanschluss (17) mit der Gleichstromübertragungsstrecke (405) verbunden sind, wobei die Gleichstromübertragungsstrecke (405) zwei verschiedene Leiterarten (410, 412) aufweist, welche sich bezüglich ihrer längenbezogenen Kapazität unterscheiden.

12. Anordnung nach Anspruch 11,
wobei
- die verschiedenen Leiterarten eine Freileitung (410), ein Kabel (412) und/oder eine gasisolierte Leitung sind.

13. Anordnung nach Anspruch 12,
wobei
- das Kabel ein kunststoffisoliertes Kabel (412), ein ölisoliertes Kabel oder ein masseisoliertes Kabel ist.

14. Anordnung nach einem der vorhergehenden Ansprüche,
wobei
- der Multilevelstromrichter (3) zwei oder drei Phasenmodule (15, 24, 31) aufweist, wobei die Spannungsbegrenzungseinrichtung zwischen den Phasenmodulen umschaltbar ist oder mindestens einem der Phasenmodule jeweils eine eigene Spannungsbegrenzungseinrichtung zugeordnet ist.

15. Hochspannungs-Gleichstrom-Übertragungsanlage (400) mit einer Anordnung (1) nach einem der Ansprüche 1 bis 14.

16. Verfahren zum polaritätsabhängigen Begrenzen einer Spannung bei einem Multilevelstromrichter (3), der mindestens ein Phasenmodul (31) aufweist,
- wobei das Phasenmodul (31) einen Wechselspannungsanschluss (9), einen ersten Gleichspannungsanschluss (16) und einen zweiten Gleichspannungsanschluss (17) aufweist,
- das Phasenmodul (31) eine Mehrzahl von Modulen (5_1 ... 5_m, 6_1 ... 6_m) aufweist, die jeweils einen ersten elektrischen Modulanschluss (512) und einen zweiten elektrischen Modulanschluss (515, 615) aufweisen,
- die Mehrzahl von Modulen Module ersten Typs (5_(n+1) ... 5_m, 6_(n+1) ... 6_m, 500) aufweist, die an ihrem ersten elektrischen Modulanschluss (512) und ihrem zweiten elektrischen Modulanschluss (515) eine Spannung ausschließlich einer Polarität oder die Spannung Null auszugeben imstande sind,
- die Mehrzahl von Modulen Module zweiten Typs (5_1 ... 5_n, 6_1 ... 6_n, 600) aufweist, die an ihrem ersten elektrischen Modulanschluss (512) und ihrem zweiten elektrischen Modulanschluss (615) eine Spannung einer Polarität, eine Spannung entgegengesetzter Polarität oder die Spannung Null auszugeben imstande sind,
- die Module zweiten Typs (5_1 ... 5_n, 6_1 ... 6_n, 600) benachbart zu dem Wechselspannungsanschluss (9) des Phasenmoduls (31) angeordnet sind, und die Module ersten Typs (5_(n+1) ... 5_m, 6_(n+1) ... 6_m, 500) benachbart zu dem ersten Gleichspannungsanschluss (16) und dem zweiten Gleichspannungsanschluss (17) des Phasenmoduls (31) angeordnet sind, wobei bei dem Verfahren
- mit einer Spannungsbegrenzungseinrichtung (50) nur eine über den Modulen zweiten Typs (5_1 ... 5_n, 6_1 ... 6_n, 600) auftretende negative Spannung (UVB) begrenzt wird und eine über den Modulen zweiten Typs auftretende Spannung (UVB) der entgegengesetzten Polarität im Wesentlichen unverändert gelassen wird, wobei die Spannungsbegrenzungseinrichtung (50) mindestens ein Halbleiterventil (65_1), insbesondere eine Reihenschaltung von Halbleiterventilen (65_1 ... 65_p), aufweist.

17. Verfahren nach Anspruch 16,
wobei
- nur bei Auftreten der negativen Spannung (UVB) über den Modulen zweiten Typs (5_1 ... 5_n, 6_1 ... 6_n, 600) ein Strom (I) durch die Spannungsbegrenzungseinrichtung (50) fließt und dadurch die negative Spannung begrenzt wird.

18. Verfahren nach Anspruch 16 oder 17,
wobei
- die Module ersten Typs (500) jeweils ein erstes elektronische Schaltelement (502) und ein zweites elektronische Schaltelement (506) in einer Halbbrückenschaltung aufweisen, wobei in Parallelschaltung zu dem zweiten elektronischen Schaltelement (506) ein zusätzliches Halbleiterventil (520) angeordnet ist und
- nur bei Auftreten der negativen Spannung (UVB) über den Modulen zweiten Typs (5_1 ... 5_n, 6_1 ... 6_n, 600) ein Teil des durch die Module ersten Typs (500) fließenden Stroms durch das zusätzliche Halbleiterventil (520) fließen wird.

## Claims

1. An assembly having a multilevel power converter (3) which has at least one phase module (31),
- wherein the phase module (31) has an alternating current voltage terminal (9), a first direct current voltage terminal (16) and a second direct current voltage terminal (17),
- the phase module (31) has a plurality of modules (5_1 ... 5_m, 6_1 ... 6 m) which each have a first electrical module terminal (512) and a second electrical module terminal (515, 615),
- the plurality of modules has modules of a first type (5_(n+1) ... 5_m, 6_(n+1) ... 6_m, 500), which are able to output a voltage of only one polarity or zero voltage at their first electrical module terminal (512) and their second electrical module terminal (515),
- the plurality of modules has modules of a second type (5_1 ... 5_n, 6_1 ... 6_n, 600), which are able to output a voltage of one polarity, a voltage of opposite polarity or zero voltage at their first electrical module terminal (512) and their second electrical module terminal (615), and
- having a voltage limiting device (50),
**characterized in that**
- the modules of the second type (5_1 ... 5_n, 6_1 ... 6_n, 600) are arranged adjacent to the alternating current voltage terminal (9) of the phase module (31), and the modules of the first type (5_(n+1) ... 5_m, 6_(n+1) ... 6_m, 500) are arranged adjacent to the first direct current voltage terminal (16) and the second direct current voltage terminal (17) of the phase moule (31),
- the voltage limiting device (50) is designed to limit only a negative voltage (UVB) occurring across the modules of the second type and to leave a voltage (UVB) of opposite polarity occurring across the modules of the second type substantially unchanged, and
- the voltage limiting device (50) comprises at least one semiconductor valve (65_1), in particular a connection in series of semiconductor valves (65_1 ... 65_p).

2. The assembly according to claim 1,
wherein
- the modules each have at least a first electronic switching element (502), a second electronic switching element (506) and an electrical energy store (510).

3. The assembly according to claim 2,
wherein
- the modules of the first type (500) each have the first electronic switching element (502) and the second electronic switching element (506) in a half-bridge circuit.

4. The assembly according to claim 2 or 3,
wherein
- the modules of the first type (500) have an additional semiconductor valve (520) connected in parallel with the second electronic switching element (506), in particular a diode, a thyristor, an IGCT or a GTO.

5. The assembly according to one of claims 2 to 4,
wherein
- the modules of the second type (600) each have the first electronic switching element (502), the second electronic switching element (506), a third electronic switching element (602) and a fourth electronic switching element (606) in a full-bridge circuit.

6. The assembly according to any one of the preceding claims,
wherein
- the voltage limiting device (50) is designed such that a current (I) only flows through the voltage limiting device (50) when the negative voltage (UVB) occurs across the modules of the second type.

7. The assembly according to any one of the preceding claims,
wherein
- the connection in series has at least 50 semiconductor valves (65_1 ... 65_p).

8. The assembly according to any one of the preceding claims,
wherein
- the at least one semiconductor valve (65_1 ... 65_p) is a diode (65_1), a thyristor (265_1), an IGCT, a GTO or a transistor.

9. The assembly according to any one of the preceding claims,
wherein
- an electrical resistor (68) is connected in series with the at least one semiconductor valve (65_1 ... 65_p).

10. The assembly according to claim 9,
wherein
- the electrical resistor is a varistor (68).

11. The assembly according to any one of the preceding claims,
wherein
- the assembly has a direct current transmission link (405), in particular a high-voltage direct current transmission link (405), and
- the first direct current voltage terminal (16) and the second direct current voltage terminal (17) are connected to the direct current transmission link (405), wherein the direct current transmission link (405) has two different kinds of conductors (410, 412) differing with respect to their length-related capacitance.

12. The assembly according to claim 11,
wherein
- the different kinds of conductors are an overhead line (410), a cable (412) and/or a gas-insulated line.

13. The assembly according to claim 12,
wherein
- the cable is a plastic-insulated cable (412), an oil-insulated cable or a ground-insulated cable.

14. The assembly according to any one of the preceding claims,
wherein
- the multilevel power converter (3) has two or three phase modules (15, 24, 31), wherein the voltage limiting device is switchable between the phase modules or a dedicated voltage limiting device is associated with each of at least one of the phase modules.

15. A high-voltage direct current transmission installation (400) having an assembly (1) according to any one of claims 1 to 14.

16. A method for polarity-dependent limiting of a voltage in a multilevel power converter (3) which has at least one phase module (31),
- wherein the phase module (31) has an alternating current voltage terminal (9), a first direct current voltage terminal (16) and a second direct current voltage terminal (17),
- the phase module (31) has a plurality of modules (5_1 ... 5_m, 6_1 ... 6 m) which each have a first electrical module terminal (512) and a second electrical module terminal (515, 615),
- the plurality of modules has modules of a first type (5_(n+1) ... 5_m, 6_(n+1) ... 6_m, 500), which are able to output a voltage of only one polarity or zero voltage at their first electrical module terminal (512) and their second electrical module terminal (515),
- the plurality of modules has modules of a second type (5_1 ... 5_n, 6_1 ... 6_n, 600), which are able to output a voltage of one polarity, a voltage of opposite polarity or zero voltage at their first electrical module terminal (512) and their second electrical module terminal (615),
- the modules of the second type (5_1 ... 5_n, 6_1 ... 6_n, 600) are arranged adjacent to the alternating current voltage terminal (9) of the phase module (31), and the modules of the first type (5_(n+1) ... 5_m, 6_(n+1) ... 6_m, 500) are arranged adjacent to the first direct current voltage terminal (16) and the second direct current voltage terminal (17) of the phase moule (31), wherein, in the method,
- with a voltage limiting device (50), only a negative voltage (UVB) occurring across the modules of the second type (5_1 ... 5_n, 6_1 ... 6_n, 600) is limited and a voltage (UVB) of opposite polarity occurring across the modules of the second type is left substantially unchanged, wherein the voltage limiting device (50) comprises at least one semiconductor valve (65_1), in particular a connection in series of semiconductor valves (65_1 ... 65_p).

17. The method according to claim 16,
wherein
- a current (I) only flows through the voltage limiting device (50) when the negative voltage (UVB) occurs across the modules of the second type (5_1 ... 5_n, 6_1 ... 6_n, 600), thereby limiting the negative voltage.

18. The method according to claim 16 or 17, wherein
- the modules of the first type (500) each have a first electronic switching element (502) and a second electronic switching element (506) in a half-bridge circuit, wherein an additional semiconductor valve (520) is arranged connected in parallel with the second electronic switching element (506), and
- only when the negative voltage (UVB) occurs across the modules of the second type (5_1 ... 5_n, 6_1 ... 6_n, 600), a part of the current flowing through the modules of the first type (500) will flow through the additional semiconductor valve (520).

## Revendications

1. Agencement avec un convertisseur multiniveau (3) comportant au moins un module de phase (31),
- dans lequel le module de phase (31) comporte une connexion de tension alternative (9), une première connexion de tension continue (16) et une deuxième connexion de tension continue (17),
- le module de phase (31) comprend une pluralité de modules (5_1 ... 5_m, 6_1 ... 6_m), chacun ayant une première connexion de module électrique (512) et une deuxième connexion de module électrique (515, 615),
- la pluralité de modules comprend des modules d'un premier type (5_(n+1) ... 5_m, 6_(n+1) ... 6_m, 500) capables de délivrer à leur première connexion électrique de module (512) et à leur deuxième connexion électrique de module (515) une tension d'une seule polarité ou une tension nulle,
- la pluralité de modules comprend des modules d'un deuxième type (5_1 ... 5_n, 6_1 ... 6_n, 600) capables de délivrer à leur première connexion électrique de module (512) et à leur deuxième connexion électrique de module (615) une tension d'une polarité, une tension de polarité opposée ou la tension nulle, et
- avec un dispositif de limitation de tension (50), **caractérisé en ce que** - les modules de deuxième type (5_1 ... 5_n, 6_1 ... 6_n, 600) sont disposés à proximité de la connexion de tension alternative (9) du module de phase (31), et les modules de premier type (5_(n+1) ... 5_m, 6_(n+1) ... 6_m, 500) sont disposés à proximité de la première connexion de tension continue (16) et de la deuxième connexion de tension continue (17) du module de phase (31),
- le dispositif de limitation de tension (50) est conçu de telle sorte qu'il limite uniquement une tension négative (UVB) se produisant aux bornes des modules de deuxième type et laisse une tension (UVB) de polarité opposée se produisant aux bornes des modules de deuxième type sensiblement inchangée, et
- le dispositif de limitation de tension (50) comporte au moins une valve à semi-conducteur (65_1), en particulier un montage en série de valves à semi-conducteur (65_1 ... 65_p) .

2. Agencement selon la revendication 1,
dans lequel
- les modules comportent chacun au moins un premier élément de commutation électronique (502), un deuxième élément de commutation électronique (506) et un accumulateur d'énergie électrique (510).

3. Agencement selon la revendication 2,
dans lequel
- les modules de premier type (500) comportent chacun le premier élément de commutation électronique (502) et le deuxième élément de commutation électronique (506) dans un circuit en demi-pont.

4. Agencement selon la revendication 2 ou 3,
dans lequel
- les modules de premier type (500) comportent, en parallèle avec le deuxième élément de commutation électronique (506), une valve à semi-conducteur supplémentaire (520), en particulier une diode, un thyristor, un IGCT ou un GTO.

5. Agencement selon l'une quelconque des revendications 2 à 4, dans lequel
- les modules de deuxième type (600) comportent chacun le premier élément de commutation électronique (502), le deuxième élément de commutation électronique (506), un troisième élément de commutation électronique (602) et un quatrième élément de commutation électronique (606) dans un circuit en pont complet.

6. Agencement selon l'une quelconque des revendications précédentes,
dans lequel
- le dispositif de limitation de tension (50) est conçu de telle sorte qu'un courant (I) circule à travers le dispositif de limitation de tension (50) uniquement lorsque la tension négative (UVB) apparaît aux bornes des modules de deuxième type.

7. Agencement selon l'une quelconque des revendications précédentes,
dans lequel
- la connexion en série comporte au moins 50 valves à semiconducteurs (65_1 ... 65_p).

8. Agencement selon l'une quelconque des revendications précédentes,
dans lequel
- l'au moins une valve à semi-conducteur (65_1 ... 65_p) est une diode (65_1), un thyristor (265_1), un IGCT, un GTO ou un transistor.

9. Agencement selon l'une quelconque des revendications précédentes,
dans lequel
- une résistance électrique (68) est connectée en série avec l'au moins une valve à semi-conducteur (65_1 ...65_p).

10. Agencement selon la revendication 9,
dans lequel
- la résistance électrique est une varistance (68).

11. Agencement selon l'une quelconque des revendications précédentes,
dans lequel
- l'agencement comprend une ligne de transmission à courant continu (405), en particulier une ligne de transmission à courant continu haute tension (405), et
- le première connexion à tension continue (16) et la deuxième connexion à tension continue (17) sont reliées à la ligne de transmission à courant continu (405), la ligne de transmission à courant continu (405) comportant deux types de conducteurs différents (410, 412) qui se distinguent par leur capacité liée à leur longueur.

12. Agencement selon la revendication 11,
dans lequel
- les différents types de conducteurs sont une ligne aérienne (410), un câble (412) et/ou une ligne isolée au gaz.

13. Agencement selon la revendication 12,
dans lequel
- le câble est un câble isolé en plastique (412), un câble isolé à l'huile ou un câble isolé à la terre.

14. Agencement selon l'une quelconque des revendications précédentes,
dans lequel
- le convertisseur multiniveau (3) comporte deux ou trois modules de phase (15, 24, 31), le dispositif de limitation de tension étant commutable entre les modules de phase ou au moins l'un des modules de phase étant doté de son propre dispositif de limitation de tension.

15. Ensemble de transmission à courant continu haute tension (400) comprenant un agencement (1) selon l'une quelconque des revendications 1 à 14.

16. Procédé de limitation de tension en fonction de la polarité dans un convertisseur multiniveau (3) comportant au moins un module de phase (31),
- dans lequel le module de phase (31) comporte une connexion de tension alternative (9), une première connexion de tension continue (16) et une deuxième connexion de tension continue (17),
- le module de phase (31) comprend une pluralité de modules (5_1 ... 5_m, 6_1 ... 6_m), chacun ayant une première connexion de module électrique (512) et une deuxième connexion de module électrique (515, 615),
- la pluralité de modules comprend des modules d'un premier type (5_(n+1) ... 5_m, 6_(n+1) ... 6_m, 500) capables de délivrer à leur première connexion électrique de module (512) et à leur deuxième connexion électrique de module (515) une tension d'une seule polarité ou une tension nulle,
- la pluralité de modules comprend des modules d'un deuxième type (5_1 ... 5_n, 6_1 ... 6_n, 600) capables de délivrer, à leur première connexion électrique de module (512) et à leur deuxième connexion électrique de module (615), une tension d'une polarité, une tension de polarité opposée ou une tension nulle,
- les modules de deuxième type (5_1 ... 5_n, 6_1 ... 6_n, 600) sont disposés à proximité de la connexion de tension alternative (9) du module de phase (31), et les modules de premier type (5_(n+1) ... 5_m, 6_(n+1) ... 6_m, 500) sont disposés adjacents à la première connexion de tension continue (16) et à la deuxième connexion de tension continue (17) du module de phase (31), dans lequel, dans le procédé
- avec un dispositif de limitation de tension (50) qui limite uniquement la tension négative (UVB) apparaissant sur les modules de deuxième type (5_1 ...5_n, 6_1 ...6_n, 600), et une tension (UVB) de polarité opposée apparaissant aux modules du deuxième type est laissée sensiblement inchangée, le dispositif de limitation de tension (50) comportant au moins une valve à semi-conducteur (65_1), en particulier un montage en série de valves à semi-conducteur (65_1 ... ... 65_p).

17. Procédé selon la revendication 16,
dans lequel
- uniquement lorsque la tension négative (UVB) apparaît au niveau des bornes de modules du deuxième type (5_1 ... 5_n, 6_1 ...6_n, 600), un courant (I) circule à travers le dispositif de limitation de tension (50) et la tension négative est ainsi limitée. 6_n, 600), un courant (I) circule à travers le dispositif de limitation de tension (50) et la tension négative est ainsi limitée.

18. Procédé selon la revendication 16 ou 17, dans lequel
- les modules de premier type (500) comportent chacun un premier élément de commutation électronique (502) et un deuxième élément de commutation électronique (506) dans un circuit en demi-pont, dans lequel une valve à semi-conducteur supplémentaire (520) est disposée en parallèle avec le deuxième élément de commutation électronique (506) et uniquement en cas d'apparition de la tension négative (UVB) sur les modules de deuxième type (5_1 ... 5_n, 6_1 ... 6_n, 600), une partie du courant circulant à travers les modules de premier type (500) circule à travers la valve à semi-conducteur supplémentaire (520).
